Europäisches Patentamt

(19) European Patent Office  (11) Numéro de publication: **0 049 204**

Office européen des brevets  **B1**

(12)  **FASCICULE DE BREVET EUROPEEN**

(45) Date de publication du fascicule du brevet: **04.12.85**  (51) Int. Cl.⁴: **E 06 B 5/16, E 06 B 3/66**

(21) Numéro de dépôt: **81401506.1**

(22) Date de dépôt: **30.09.81**

(54) Cadre entretoise pour vitrage anti-feu à gel.

(30) Priorité: **01.10.80 DE 3037015**

(43) Date de publication de la demande:
**07.04.82 Bulletin 82/14**

(45) Mention de la délivrance du brevet:
**04.12.85 Bulletin 85/49**

(84) Etats contractants désignés:
**AT BE CH FR GB IT LI LU NL SE**

(56) Documents cités:
**DE-A-2 537 017**
**DE-A-2 625 993**
**FR-A-2 346 300**
**FR-A-2 346 548**
**FR-A-2 405 905**
**FR-A-2 411 165**
**FR-A-2 455 669**
**US-A-4 183 693**

(73) Titulaire: **SAINT-GOBAIN VITRAGE**
**Les Miroirs 18, avenue d'Alsace**
**F-92400 Courbevoie (FR)**

(72) Inventeur: **Ortmanns, Günter**
**Hoefchensweg 121**
**D-5100 Aachen (DE)**
Inventeur: **Fischer, Guntram**
**Wilhelm Pitt Strasse 44**
**D-5190 Stolberg Breinig (DE)**

(74) Mandataire: **Eudes, Marcel et al**
**Saint-Gobain Recherche 39 Quai Lucien Lefranc**
**F-93304 Aubervilliers Cedex (FR)**

Courier Press, Leamington Spa, England.

## Description

L'invention concerne un cadre entretoise pour vitrage multiple pour vitrage multiple anti-feu dans lequel l'espace intercalaire séparant les feuilles de verre est rempli par un gel organique qui contient notamment des sels minéraux et de l'eau.

Un tel cadre entretoise est constitué par des éléments profilés à section transversale approximativement en forme de U, il est en acier inoxydable, le côté ouvert des profilés qui correspond au côté ouvert du U est dirigé vers l'espace intercalaire rempli de gel et les profilés sont reliés entre eux par des cornières emboîtables.

Des vitrages multiples anti-feu dans lesquels l'espace délimité par les différentes feuilles de verre et le cadre entretoise est remplie par un gel organique contenant des sels minéraux et de l'eau sont décrits dans le brevet français publié sous le n° 2 346 548. Lors d'un incendie, sous l'action de la chaleur, l'eau se vaporise et après combustion de la partie organique du gel, les sels minéraux se transforment en une mousse formant écran protecteur contre le feu et la chaleur. Afin que cette mousse reste telle quelle et ne se rompe pas après le bris des feuilles de verre et en particulier de celle tournée du côté de l'incendie, on peut, comme décrit dans le brevet français publié sous le n° 2 405 905, recouvrir les faces intérieures des feuilles de verre, c'est à dire celles en contact avec le gel, avec un agent d'adhérence, choisi par exemple dans la famille des titanates organiques, des zirconates organiques ou des silanes, qui réagit d'une part avec le verre et d'autre part avec les liaisons carbonées multiples du gel.

Conformément au brevet français n° 2 411 165, en raison de la composition du gel présentant une action fortement corrosive, il est connu de réaliser le cadre entretoise d'un tel vitrage transversale approximativement en forme de U, avec le côté ouvert du U dirigé vers le gel le cadre entretoise étant ainsi également rempli par le gel. De cette manière, en cas d'incendie, le cadre entretoise fournit à la mousse isolante formée un maintien supplémentaire qui est encore accru par le fait que les ailes latérales des éléments profilés appliquées contre les feuilles de verre sont munies à leur extrémité d'épaulement, de rebords ou d'appendices saillants recourbés les uns en direction des autres et qui s'engagent à la façon de crochets dans le gel ou la mouse isolante.

Dans le cas de ces vitrages spéciaux, des problèmes apparaissent aux angles du cadre-entretoise, et ce en raison de la composition du gel qui a une action corrosive comparable à celle d'un électrolyte. Un soudage des angles est onéreux et peut, par la suite de la juxtaposition de deux métaux différents, celui de la soudure et celui des profilés, conduire à des phénomènes de corrosion entraînant une coloration du gel en ces emplacements. La liaison des éléments profilés à l'aide de cornières emboîtables est en principe plus avantageuse, mais les formes de réalisation connues de cornières emboîtables pour le cas particulier présent ne sont pas satisfaisantes.

En effet, il est connu par l'homme du métier de réaliser de telles pièces d'angle en trois éléments à 45° avec un évidement dans les ailes suivant les enseignements des brevets US—A—4 183 693 et DE—A—2 625 993. Toutefois, ces pièces ne conviennent pas à des cadres antifeu car d'une part leur résistance est insuffisante compte tenu des contraintes mécaniques dues aux effets thermiques, et d'autre part elles sont très sujettes à la corrosion.

C'est pourquoi, la présente invention a pour objet de créer un cadre-entretoise approprié pour un vitrage anti-feu du type décrit plus haut, constitué par des éléments profilés en acier inoxydable reliés entre eux par des cornières emboîtables, lesdites cornières emboîtables devant répondre aux exigences particulières requises pour des vitrages anti-feu. En particulier les cornières emboîtables doivent assurer une résistance mécanique suffisante du cadre-entretoise, garantir l'enveloppement avec accrochage du gel ou de la mousse qui en a résulté lors d'un incendie, dans la zone des angles, ne pas conduire à longue échéance à des phénomènes de corrosion, garantir une étanchéité parfaite du vitrage et permettre le remplissage de l'espace entre les feuilles de verre par la solution gélifiante, dans les angles. Ce problème est résolu conformément à l'invention telle que revendiquée dans les revendications 1 à 12 grâce au fait que les cornières emboîtables sont des cornières à section en forme de U en tôle d'acier inoxydable emboutie comportant trois portions respectivement coudées à 45° les unes des autres, à savoir aux extrémités deux branches emboîtables et au centre un élément de jonction s'étendant obliquement par rapport à ces branches, qu'entre les différentes portions, les ailes latérales qui correspondant aux bras du U sont évidées dans les zones coudées, que les parties des ailes latérales situées entre ces évidements, sont précintrées vers l'extérieur avec formation de parties saillantes servant de butées pour les éléments profilés droits du cadre entretoise et qu'une ouverture pour le remplissage par la solution gélifiante est prévue dans le partie médiane de l'élément de jonction.

Les cornières décrites ci-dessus conviennent parfaitement. Elles permettent un remplissage par la solution gélifiante, directement dans les angles, elles procurent un soutien supplémentaire de la mousse formée lors d'un incendie, elles donnent une bonne résistance mécanique au cadre entretoise, elles autorisent l'injection d'un mastic d'étanchèité à la périphérie du cadre entretoise, angles y compris. En outre, les cornières en tôle emboutie conformes à l'invention présentent par rapport aux cornières usuelles en matériau plein, l'avantage important de maintenir à un très faible niveau l'influence de la chaleur dans l'angle du vitrage, et ceci grâce à la faible épaisseur de sa paroi, à sa forme et à son remplissage par le gel. Cet avantage est très bénéfigue à différentes points de vue pour la tenue au feu de l'ensemble du vitrage.

D'autres caractéristiques et avantages de l'invention apparaîtront dans la description suivante d'un mode de réalisation préféré de l'invention, faite en relation avec les figures qui représentent:

la figure 1 une vue en coupe de la zone marginale d'un vitrage double présentant les caractéristiques de l'invention,

la figure 2 une vue latérale en élévation, en coupe partielle, d'une cornière emboîtable pour la cadre-entretoise,

la figure 3 une vue en plan d'un cadre-entretoise tel que représenté sur la figure 2, mais avec une ouverture de remplissage,

la figure 4 une vue en coupe conformément à la ligne IV—IV de la figure 2,

la figure 5 une représentation en coupe conformément à la ligne V—V de la figure 2.

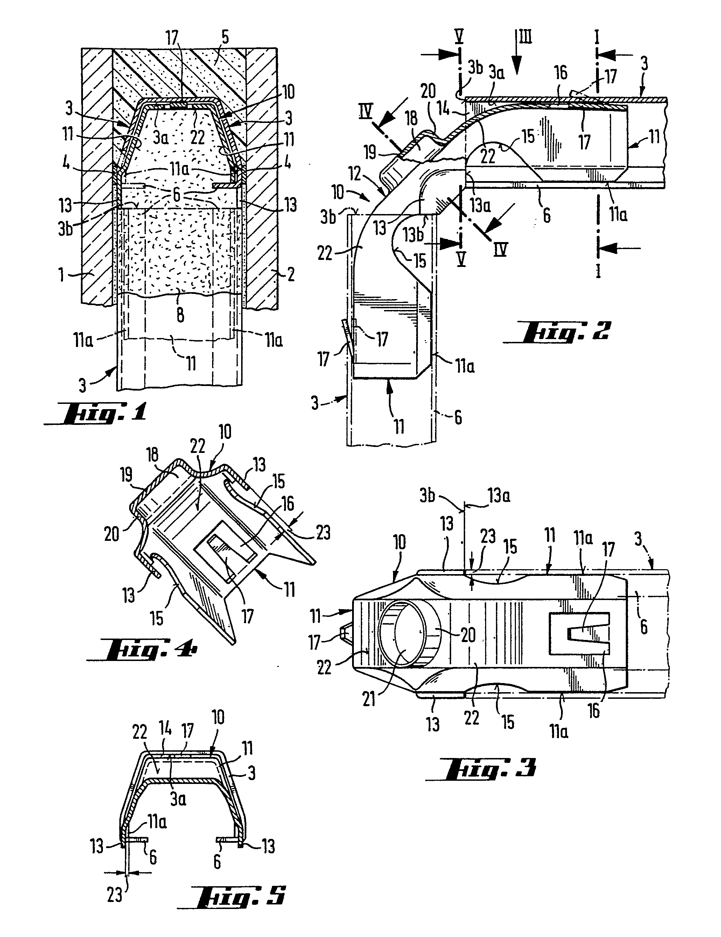

Un vitrage anti-feu à gel est constitué comme montré figure 1. Ainsi, deux feuilles de verre 1 et 2 en un verre à base de silicate, trempées thermiquement, sont maintenues espacées par un cadre-entretoise constitué par des profilés 3 à section transversale approximativement en forme de U, et reliées entre elles par l'intermédiaire de mastics d'étanchéité ou de colles 4, 5. On dépose de façon connue la colle 4 sur les ailes latérales des profilés du cadre entretoise qui correspondant aux bras du U, et on applique les feuilles de verre 1, 2 respectivement de chaque côté du cadre entretoise. Ensuite, on rend le vitrage étanche en injectant un mastic d'étanchéité 5 à l'extérieur de cadre entretoise, dans l'espace limité par les bords des feuilles de verre 1 et 2 et le cadre entretoise lui-même. Pour permettre la bonne mise en place du mastic 5, les profilés 3 ont avantageusement une section en angle ou trapèzoïdale plutôt que strictement en forme de U. Les ailes latérales de ces profilés 3 sont tournées vers l'intérieur du vitrage et comportent à leurs extrémités des appendices saillants ou retours 6, dirigés les uns vers les autres, les profilés 3, perpendiculaires entre eux sont reliés par des cornières 10, chaque cornière comportant trois portions, deux portions d'extrémité ou branches emboîtables 11, séparées et reliées entre-elles grâce à une portion centrale ou élément de jonction 12, les branches emboîtables 11 étant recourbées à 45° par rapport à l'élément de jonction 11. Comme les profilés 3, les cornières 10 ont une section transversale approximativement en forme de U avec une embase qui correspond à la base du U, et des ailes latérales 11a qui correspondent aux bras du U. Ces cornières 10 sont en tôle d'acier inoxydable emboutie, de 0,6 mm d'épasseur. Il peut s'agir d'acier inoxydable à 18 % de chrome, 12 % de nickel et 2,25 % de molybdène, et en particulier il s'agira du même acier que celui dont sont constitués les profilés droits 3.

Les cornières 10 s'engagent par leurs branches emboîtables 11 dans les profilés droits 3 qui forment les côtés du cadre entretoise. Les branches emboîtables 11 prennent appui d'une part par l'intermédiaire de leurs ailes latérales 11a contre les appendices saillants 6 des extrémités de profilés 3 et, d'autre part, par l'intermédiaire de languettes 17, dépoupées dans leur embase 22 et repoussées vers l'extérieur, contre la partie médiane 3a des profilés 3 (figures 1 et 2).

Afin d'évier les plis de métal sur les ailes latérales 11a des cornières 10 du fait de l'inclinaison à 45° des branches emboîtables 11 par rapport à l'élément de jonction 12, des évidements sont pratiqués dans lesdites ailes latérales à la jointure entre l'élément de jonction 12 et chacune des branches emboîtables 11. En outre, les parties d'ailes latérales 11a appartenant à l'élément de jonction 12 et situées entre deux évidements 15, sont repoussées vers l'extérieur pour former un bossage 13, qui fait saillie d'une hauteur 23 au maximum égale à l'épasseur des ailes latérales 3a des profilées 3 (figures 1, 3, 4 et 5).

Au milieu des éléments de jonction 12, dans leur embase 22, on réalise par pressage, un renfoncement 18 en forme de bouton. Le fond 19 ce de renfoncement 18 peut-être découpé et enlevé au cours d'une phase d'usinage supplémentaire de sorte qu'il peut ne subsister qu'une paroi périphérique cylindrique 20 qui correspond au tour du bouton, et une ouverture 21 à la place du fond 19 enlevé.

Une ouverture 21 pourra être utilisée pour l'introduction du gel 8 à l'intérieur du vitrage multiple, d'autres ouvertures 21 pourront servir à l'évacuation de l'air contenu dans le vitrage, lors du remplissage par le gel.

Les dimensions extérieures de la section transversale des branches emboîtables 11 correspondant aux dimensions intérieures des profilés 3; ainsi on pourra obtenir un montage sans jeu des cornières 10 dans les profilés 3. Lorsque les cornières 10 sont ainsi emboîtées dans les profilés 3, les tranches 3b des extrémités de profilés 3 viennent buter contre les bossages 13, et en particulier contre leurs leurs côtés 13a et 13b. Entre la partie courbe de l'embasse 22 des cornières et la partie médiane 3a des extrémités de profilés 3, apparaît une cavité 14 qui pourra être comblée lors du scellement du vitrage par le mastic d'étanchéité 5.

Ainsi donc, pour fabriquer un vitrage anti-fue, on assemble le cadre entretoise en reliant les profilés 3 entre eux à l'aide des cornières 10, emboîtées dans lesdits profilés jusqu'à buter par leurs bossages 13 contre les tranches 3b des extrémités de profilés. Certaines cornières muniés d'un orifice 21, pour d'autres, le fond 19 du bouton 18 est resté en place. Du fait de la correspondance entre les dimensions extérieures des cornières et intérieures des profilés, la liaison ainsi assemblée est solide. Cette solidité est encore renforcée par l'appui des languettes 17 sur les parties médianes des profilés 3, et par l'engagement des ailes latérales 11a des cornières 10 sous les retours 6 des profilés 3. Les ailes latérales des profilés et des corniéres sont enduites d'une colle 4, les feuilles de verre 1 et 2 préalablement recouvertes d'un agent d'adhérence comme dit dans le brevet français 2 405 905 sont appliquées de chaque côté du cadre entretoise et pressées. Ensuite, le mastic d'étanchéite 5 est injecté, d'abord dans les cavités 14, ce qui renforce encore la solidité des angles et leur étanchéité, puis sur toute la périphérie du vitrage. Préalablement au recouvrement des orifices 21 par le mastic 5, des petits tubes de préférence légèrement coniques sont introduits dans lesdits orifices 21 pour éviter qu'ils ne soient bouchés, petits tubes qui faciliteront le remplissage par le gel 8 et l'évacuation de l'air.

Après remplissage par le gel, les orifices 21 sont eux aussi fermés par du mastic 5. En général sur des vitrages rectangulaires, seulement deux corniéres 10 diagonalement opposées sont munies d'un orifice 21 les autres conservant un bouton 18 avec fond 19.

Avantageusement toutes les extrémités des profilés, corniéres, et en général toutes les coupes et surfaces sont nettes en sans bavures pour limiter la corrosion.

Un vitrage fabriqué comme décrit ci-dessus et montré sur la figure 1, ayant deux feuilles de verre trempées de 6 mm d'épaisseur, et une épaisseur de gel de 18 mm, soit une épaisseur totale de 30 mm possède un taux de transmission lumineuse de 87% et correspond à la classe F 30 définie dans la norme allemande DIN 4102 sur les parois coupe-feu.

Un vitrage du même type mais de 70,5 mm d'épaisseur totale, constitué d'une feuille de verre trempé de 6 mm, d'une couche de gel de 37 mm d'épaisseur, d'une feuille de verre de 3 mm, d'une autre couche de gel de 18,5 mm, d'une feuille de verre de 6 mm, correspond à la classe F 90 de la même norme DIN 4102.

Avantageusement, pour augmenter la protection contre la corrosion, on soumet au moins les corniéres du cadre métallique à une opération de galvonoplastie. Par cette opération, on peut déposer une couche généralement supérieure à 5 μm et de préférence égale à environ 8 μ d'un métal choisi par exemple parmi le nickel ou le chrome, avec une préférence pour le nickel.

**Revendications**

1. Cadre-entretoise constitué par des profiles (3) possédant une section transversale approximativement en forme de U en acier inoxydable, utilisable pour la fabrication de vitrages multiples anti-feu, dans lesquels l'espace intercalaire entre au moins deux feuilles de verre (1, 2) à base de silicate est rempli par un gel, notamment un gel contenant des sels et de l'eau, le côté ouvert des profilés étant dirigé vers l'espace intercalaire rempli de gel et les profilés étant reliés entre eux par des corniérs emboîtables (10) en tôle emboutie à section approximativement en U qui comporte trois portions coudées à 45° respectivement les unes par rapport aux autres, à savoir deux extrémités ou branches emboîtables et un élément de jonction central caractérisé en ce que les corniéres (10) sont en acier inoxydable et qu'entre les extrémités ou branches emboîtables (11, 12) les ailes latérales (11a) sont munies d'évidements (15) dans les régions coudées et que les parties des ailes latérales, situées entre ces évidements, sont repoussées vers l'extérieur avec formation de bossages (13) n'ayant pas de découpe et servant de butées pour les extrémités des profilés (3), et que dans au moins une corniére (10) du cadre-entretoise il est prévu dans l'embase (22) de l'élément de jonction (12), une ouverture (21) permettant l'introduction du gel.

2. Cadre-entretoise suivant la revendication 1, caractérisé en ce qu'il est prévu des ouvertures respectives (21) dans deux corniéres (10) se faisant face en diagonale afin de permettre l'introduction du gel dans l'espace intercalaire entre les feuilles de verre.

3. Cadre-entretoise selon les revendications 1 et 2, caractérisé en ce que les profilés (3) et les corniéres emboîtables (10) sont constitués par le même acier inoxydable.

4. Cadre-entretoise suivant la revendication 3, caractérisé en ce que les profilés (3) et les corniéres (10) sont constitués par un acier au chrome et au nickel comportant 18 % de chrome, 12 % de nickel et 2,25 % de molybdène.

5. Cadre-entretoise suivant les revendications 1 à 4, caractérisé en ce que les branches emboîtables des corniéres (10) sont équipées, au niveau de leur embase (22) de languettes de maintien (17) légèrement recourbées vers l'extérieur et qui viennent s'appliquer intérieurement contre la partie médiane (3a) des profilés (3).

6. Cadre-entretoise suivant les revendications 1 à 5, caractérisé en ce que l'embase (22) de l'élément de jonction (12) des corniéres est munie d'un renfoncement (18) ressortant extérieurement à la manière d'un bouton.

7. Cadre-entretoise suivant la revendication 6, caractérisé en ce que pour la réalisation de l'ouverture de remplissage (21), le fond (19) du renfoncement (18) en forme de bouton est découpé.

8. Cadre-entretoise suivant les revendications 1 à 7, caractérisé en ce que les profilés (3) sont munis, à l'extrémité de leurs ailes latérales de retours (6) dirigés vers l'intérieur et contre lesquels s'appuient les ailes latérales (11a) des branches emboîtables (11) des corniéres (10).

9. Cadre-entretoise suivant les revendications 1 à 8, caractérisé en ce que les profilés (3) et les corniéres (10) possèdent des surfaces d'extrémité lisses, réalisées par découpage.

10. Vitrage anti-feu utilisant le cadre-entretoise selon l'une quelconque des revendications précédentes.

11. Cadre-entretoise suivant une des revendications 1 à 9, caractérisé en ce que au moins les corniéres sont recouvertes d'une couche d'un nickel déposée par galvanoplastie.

12. Cadre-entretoise suivant la revendication 11, caractérisé em ce que la couche de métal a une épasseur d'au moins 5 microns et de préférence égale à 8 microns, et que ce métal est choisi parmi le chrome ou de préférence le nickel.

**Patentansprüche**

1. Abstandsrahmen aus im Querschnitt etwa U-förmigen Profilabschnitten (3) aus korrosionsbeständigem Stahl für die Herstellung von feuerwiderstandsfähigen Mehrfach-Glasscheiben, bei denen der Zwischenraum zwischen wenigstens zwei Silikatglasscheiben (1, 2) mit einem insbesondere salz- und wasserhaltigen Gel gefüllt ist, wobei die offene Seite der Profilabschnitte zum gefüllten Zwischenraum hin gerichtet ist, und die Profilabschnitte durch Einsteckwinkel (10) miteinander verbunden sind, die aus tiefegezogenem Blech mit annähernd U-förmigem Querschnitt bestehen und drei jeweils um 45° zueinander abgewinkelte Abschnitte aufweisen, nämlich zwei End- oder Einsteckabschnitte und einen mittleren Verbindungsabschnitt, dadurch gekennzeichnet, daß die Einsteckwinkel (10) aus korrosionsbeständigem Stahl bestehen und daß zwischen den End- oder Einsteckabschnitten (11) die Seitenstege (11a) in den umgebogenen Bereichen mit Aussparungen (15) versehen sind, und daß die zwischen diesen Aussparungen liegenden Teile der Seitenstege nach außen vorgewölbt sind unter Bildung von Vorsprüngen (13), die keine Schnittkanten aufweisen und als Anschläge für die Enden der Profilabschnitte (3) dienen, und daß in wenigstens einem Einsteckwinkel (10) des Abstandsrahmens im Mittelsteg (22) des Verbindungsabschnitts (12) eine Öffnung (21) zum Einführen des Gels vorgesehen ist.

2. Abstandsrahmen nach Anspruch 1, dadurch gekennzeichnet, daß in zwei diagonal einander gegenüberliegenden Einsteckwinkeln (10) je eine Öffnung (21) vorgesehen ist.

3. Abstandsrahmen nach Anspruch 1 und 2, dadurch gekennzeichnet, daß die Profilabschnitte (3) und die Einsteckwinkel (10) aus dem gleichen korrosionsbeständigen Stahl bestehen.

4. Abstandsrahmen nach Anspruch 3, dadurch gekennzeichnet, daß die Profilabschnitte (3) und die Einsteckwinkel (10) aus einem Chrom-Nickel-Stahl mit 18 % Chrom, 12 % Nickel und 2,25 % Molybdän bestehen.

5. Abstandsrahmen nach Anspruch 1 bis 4, dadurch gekennzeichnet, daß die Einsteckabschnitte der Einsteckwinkel (10) auf dem Mittelsteg mit nach außen leicht abgebogenen Haltezungen (17) versehen sind, welche am Mittelsteg (3a) des Profilabschnitts (3) innen zur Anlage kommen.

6. Abstandsrahmen nach Anspruch 1 bis 5, dadurch gekennzeichnet, daß der Mittelsteg (22) des Verbindungsabschnittes (12) der Einsteckwinkel mit einer nach außen gerichteten napfförmigen Vertiefung (18) versehen ist.

7. Abstandsrahmen nach Anspruch 6, dadurch gekennzeichnet, daß zur Bildung der Einfüllöffnung (21) der Boden (19) der napfförmigen Vertiefung (18) ausgestanzt ist.

8. Abstandsrahmen nach Anspruch 1 bis 7, dadurch gekennzeichnet, daß die Profilabschnitte (3) am Ende der Seitenstege mit nach innen gerichteten Ansätzen (6) versehen sind, gegen die sich die Seitenstege (11a) und der Einsteckschenkel (11) der Einsteckwinkel (10) abstützen.

9. Abstandsrahmen nach Anspruch 1 bis 8, dadurch gekennzeichnet, daß die Profilabschnitte (3) und die Einsteckwinkel (10) glatte, durch Stanzen hergestellte Endfläche aufweisen.

10. Feuerwiderstandsfähige Verglasung mit einem Abstandsrahmen nach einem der voraufgehenden Ansprüche.

11. Abstandsrahmen nach einem der Ansprüche 1 bis 9, dadurch gekennzeichnet, daß wenigstens die Einsteckwinkel mit einer galvanisch aufgebrachten Nickelschicht versehen sind.

12. Abstandsrahmen nach Anspruch 11, dadurch gekennzeichnet, daß die Metallschicht eine Dicke von wenigstens 5 µm, und vorzugsweise von 8 µm, aufweist, und daß das Metall aus Chrom oder vorzugsweise aus Nickel besteht.

**Claims**

1. A spacer frame comprising section members (3) having an approximately U-shaped transverse section of stainless steel, usable in making fire-resistant multiple panes, in which the space between at least two sheets of silicate glass (1, 2) contains a gel, such as a gel containing salts and water, the open side of the section members being directed towards the space containing the gel and the section members being connected to each other by insertable angle pieces (10) of pressed sheet of approximately U-shaped cross-section which comprises three portions inclined at 45° from each other, that is two insertable ends or branches and a central joining element, characterised in that the angle pieces (10) are of stainless steel, between the insertable ends or branches (11, 12) the lateral wings (11a) are provided with openings (15) in the angled regions, the parts of the lateral wings situated between the openings are displaced towards the exterior with formation of projections (13) without cutting out serving as abutments for the ends of the section members (3), and in at least one angle member (10) of the spacer frame there is provided in the shoulder (22) of the joining element (12) an opening (21) allowing introduction of gel.

2. A spacer frame according to claim 1, characterised in that it is provided with diagonally facing respective openings (21) in two angle pieces (10) to allow introduction of gel in the space between the glass sheets.

3. A spacer according to claim 1 or 2, characterised in that the section members (3) and the insertable angle pieces (10) are made of the same stainless steel.

4. A spacer according to claim 3, characterised in that the section members (3) and the angle pieces (10) are formed of a chrome/nickel stainless steel comprising 18% chromium, 12% nickel and 2.25% molybdenum.

5. A spacer frame according to one of claims 1 to 4, characterised in that the insertable branches of the angle pieces (10) are provided, at the level of their shoulder (22) with holding tongues (17) slightly turned towards the exterior and which come into interior contact with the middle part (3a) of the section members (3).

6. A spacer frame according to one of claims 1 to 5, characterised in that the shoulder (22) of the joining element (12) of the angle pieces is provided with a projection (18) extending outwardly in the manner of a knob.

7. A spacer frame according to claim 6, characterised in that to form the opening for introducing gel (21) the bottom (19) of the knob-shaped projection (18) is cut out.

8. A spacer frame according to one of claims 1 to 7, characterised in that the section members (3) are provided, at the end of their lateral wings, with inwardly directed flanges (6) with which the lateral wings (11a) of the insertable branches (11) of the angle pieces (10) come into contact.

9. A spacer frame according to one of claims 1 to 8, characterised in that the section members (3) and the angle pieces (10) have smooth end surfaces, formed by cutting.

10. A fire-resistant window using a spacer frame according to any one of the preceding claims.

11. A spacer frame according to any one of claims 1 to 9, characterised in that at least the angle pieces are covered with an electrically deposited layer of nickel.

12. A spacer frame according to claim 11, characterised in that the metal layer has a thickness of at least 5 microns, preferably 8 microns, and the metal is chosen from chromium and, preferably, nickel.

Fig. 1

Fig. 2

Fig. 4

Fig. 3

Fig. 5